# EUROPÄISCHE PATENTSCHRIFT

(11) **EP 2 762 458 B1**
(45) Veröffentlichungstag und Bekanntmachung des Hinweises auf die Patenterteilung: **17.05.2017**
(21) Anmeldenummer: 14000393.0
(22) Anmeldetag: 04.02.2014
(51) Int. Cl.: C03C 8/16, C03C 17/04, B65D 51/20

(54) **Versiegelungssystem und Beschichtungsmittel für ein Versiegelungssystem**
Sealing system and coating for a sealing system
Système de scellement et agent de revêtement pour un système de scellement

(30) Priorität: 05.02.2013 DE 102013101128
(43) Veröffentlichungstag der Anmeldung: 06.08.2014
(73) Patentinhaber: Heinz-Glas GmbH & Co. KGaA, 96355 Tettau (DE)
(72) Erfinder: Rebhan, Helmut, 96317 Kronach (DE)
(74) Vertreter: Schneider, Andreas

(56) Entgegenhaltungen:
- EP-A1- 1 052 230
- WO-A1-2006/024619

## Beschreibung

Die Erfindung betrifft ein Versiegelungssystem für die Mündung eines Glasgefäßes. Darüber hinaus betrifft die Erfindung ein Beschichtungsmittel zur Verwendung in einem solchen Versiegelungssystem.

Glasgefäße werden seit langem zur Aufbewahrung von kosmetischen Erzeugnissen, Lebensmitteln und dergleichen verwendet. Wird zum Verschluß der Gefäßöffnung ein Schraubdeckel verwendet, so kann das Gefäß nach der Entnahme einer benötigten Teilmenge wieder sicher verschlossen werden. Die Verwendung von Schraubdeckeln ist mit vielen Vorteilen verbunden. So lassen sich Schraubdeckel problemlos automatisiert herstellen, zum Zweck der Abdichtung mit einer Deckeleinlage versehen, am Einsatzort, beispielsweise an der Abfüllanlage, sicher bereitstellen und nach dem Befüllen des Gefäßes automatisiert aufschrauben.

Um einen zusätzlichen Schutz des Gefäßinhaltes vor Umwelteinflüssen zu erreichen, wird die Mündung des Glasgefäßes teilweise zusätzlich mit einer Siegelfolie verschlossen. Nach dem Öffnen des Schraubdeckels zeigt die unbeschädigte Siegelfolie dem Kunden die Originalität und Unversehrtheit des Produktes.

Siegelfolien werden beispielsweise bei der Aufbewahrung trockener Lebensmittel, wie z. B. Pulverkaffee oder Trockenmilch, verwendet, da sie einen sicheren Schutz vor Feuchtigkeit bietet. Gleiches gilt im besonderen Maße auch für Arzneimittel und ähnliche Produkte, wie beispielsweise Nahrungsergänzungsmittel.

Vorzugsweise ist die Siegelfolie mit dem Schraubdeckel so verbunden, daß beim Entfernen des Schraubdeckels ein typisches "Knack"-Geräusch entsteht, das dem Kunden die Unversehrtheit des Verschlusses anzeigt.

An der Siegelfolie kann zudem eine Grifflasche befestigt sein, die auch als Aufreißlasche bezeichnet wird. Sie dient dazu, nach dem Entfernen des Schraubdeckels die Siegelfolie leichter wieder von der Mündung zu entfernen.

Die Siegelfolie ist üblicherweise mehrlagig aufgebaut und umfaßt typischerweise eine Metallschicht und eine Kunststoffschicht. Beispielsweise umfaßt sie eine Oberschicht aus einem Aluminiummaterial und eine als Verbindungsschicht dienende Unterschicht aus einem Kunststoffmaterial. Ober- und Unterschicht können dabei über einen Haftvermittler als Zwischenschicht miteinander verbunden sein.

Damit die Verbindungsschicht der Siegelfolie die gewünschte feste Verbindung mit der Mündung des Glasgefäßes eingeht, wird die Mündungsoberfläche vor dem Aufbringen der Siegelfolie mit einem speziellen Material beschichtet. Während des Versiegelungsvorgangs erfolgt dann eine Erwärmung der Verbindungsschicht, so daß diese sich mit den reaktiven Komponenten der Mündungsbeschichtung verbindet. Häufig wird dabei die Verbindung zwischen der untersten Schicht der Siegelfolie und der Mündungsbeschichtung auf der Grundlage einer chemischen Adhäsion hergestellt. In anderen Fällen beruht diese Verbindung auf kapillarer Adhäsion, wobei das Erwärmen der Verbindungsschicht zu einem Erweichen dieser Schicht führt, die ein besonders zuverlässiges Eindringen von Teilen der Verbindungsschicht in die durch eine rauhe Oberfläche der Mündungsbeschichtung gebildeten kapillaren Öffnungen und damit eine gute kapillare Haftung sicherstellt. Die Erwärmung der Verbindungsschicht erfolgt zumeist indirekt durch eine Erwärmung der benachbarten metallischen Oberschicht.

Aus dem Stand der Technik sind zur Erwärmung der Verbindungsschicht verschiedene Verfahren bekannt. So kann ein direkter Wärmeeintrag in die Aluminiumschicht mit Hilfe eines konduktiven Siegelkopfes bei direkter Berührung der Siegelfolie erfolgen. Der Siegelkopf kann dann zugleich als eine Art Stempel dienen zum Aufbringen einer definierten Druckkraft auf die Siegelfolie und damit als Grundlage für eine Verbindung zwischen Verbindungsschicht und Mündungsbeschichtung auf der Grundlage einer physikalischen Adhäsion. Eine andere Technik sieht einen berührungslosen Energieeintrag in die Siegelfolie mit Hilfe eines zur induktiven Erwärmung der Oberschicht ausgebildeten Siegelkopfes vor. Die induktive Erwärmung hat sich als besonders vorteilhaft erwiesen.

In den Fällen, in denen der Siegelkopf nach Art eines Stempels die Siegelfolie während des Wärmeeintrags berührt, stellt die vom Siegelkopf auf die Siegelfolie ausgeübte Druckkraft sicher, daß die Siegelfolie an der gesamten Mündungsfläche anliegt. Bei einem berührungslosen, indirekten Wärmeeintrag fehlt die durch den Siegelkopf aufzubringende Druckkraft auf die Siegelfolie. Die Versiegelung erfolgt daher in diesen Fällen erst, nachdem die Öffnung des Gefäßes mit einem Schraubdeckel verschlossen wurde. Der Schraubdeckel ist zu diesem Zweck derart ausgeführt, daß er im verschraubten Zustand die Siegelfolie so beaufschlagt, daß sie vollständig an der Mündung anliegt. Zu diesem Zweck umfaßt der Schraubdeckel eine in der Regel vormonierte Deckeleinlage in Form einer definiert elastischen Scheibe, die beim Verschrauben des Deckels vor allem im Bereich des Mündungsrandes die Siegelfolie gegen die Mündung drückt.

Soll eine berührungslose, indirekte Erwärmung der Siegelfolie erfolgen, wird die Druckkraft, die sicherstellt, daß die Siegelfolie an der gesamten Mündungsfläche anliegt, von dem Schraubdeckel auf die Siegelfolie ausgeübt. Vor dem Versiegeln muß daher der Schraubdeckel auf die Mündung aufgeschraubt werden. Dabei liegt die Siegelfolie entweder bereits an der Mündung an oder die Siegelfolie ist in dem Schraubdeckel befestigt und wird zusammen mit dem Schraubdeckel an die Mündung gebracht. Anschließend wird das gefüllte, verschlossene, jedoch noch nicht versiegelte Glasgefäß typischerweise durch einen Induktionstunnel bewegt, in dem durch mehrere Induktoren eine Anzahl elektromagnetischer Felder erzeugt werden. Der Feldverlauf innerhalb des Induktionstunnels ist mehr oder weniger willkürlich, dabei nur schwer zu bestimmen und verändert sich in Abhängigkeit von der Durchlaufgeschwindigkeit der Glasgefäße durch den Induktionstunnel, die unmittelbar von der Abfüllgeschwindigkeit der Abfüllanlage abhängt.

Insbesondere der Feldverlauf im Inneren der Siegelfolie und damit der tatsächliche Energieeintrag in die Siegelfolie kann daher stark schwanken. Die Richtung des elektromagnetischen Feldes und somit auch mögliche Störungen und Beeinflussungen können weder ermittelt, noch bewertet werden.

Wegen des schlecht kontrollierbaren Energieeintrags in die Siegelfolie kann es dazu kommen, daß die Folie zu stark erwärmt wird, was zu einem Verbrennen der Folie führt. Wird andererseits zu wenig Energie zugeführt, kann sich die Siegelfolie nicht richtig mit der Mündung verbinden und ein dichtes Verschließen der Öffnung ist nicht gewährleistet. Problematisch ist dies auch deshalb, weil eine Überprüfung der ordnungsgemäßen Versiegelung ohne ein Entfernen des Schraubdeckels und damit verbunden einer Zerstörung der Siegelfolie nicht möglich ist. In der Praxis erfolgt daher, wenn überhaupt, nur eine stichprobenartige Überprüfung der Versiegelung.

Erfolgt die Verbindung zwischen der Verbindungsschicht der Siegelfolie und der Mündungsbeschichtung auf der Grundlage einer physikalischen und/oder kapillaren Adhäsion und ist gleichzeitig ein berührungsloser Energieeintrag in die Siegelfolie mit Hilfe eines Siegelkopfes vorgesehen, so daß eine Druckkraft ausschließlich durch eine Verschlußkappe, wie beispielsweise einen Schraubdeckel, auf die Siegelfolie aufgebracht wird, so kann es unter bestimmten Bedingungen vorkommen, daß eine sichere Verbindung nicht gewährleistet ist.

Eine Aufgabe der vorliegenden Erfindung ist es, eine sichere Verbindung auch dann zu gewährleisten, wenn zum Herstellen einer Verbindung zwischen der Siegelfolie und der Mündung ein Druck auf die Siegelfolie ausschließlich mit Hilfe des Schraubdeckels oder eines anderen Verschlusses ausgeübt wird.

Diese Aufgabe wird durch ein Versiegelungssystem nach Anspruch 1 gelöst.

Das erfindungsgemäße Versiegelungssystem, umfassend eine an einer Oberfläche einer Mündung eines offenen Glasgefäßes, insbesondere eines Opalglasgefäßes, angebrachte Mündungsbeschichtung zur Bildung einer Haftunterlage für eine Siegelfolie und eine mehrlagige Siegelfolie mit einer unteren, im versiegelten Zustand in unmittelbarem Kontakt zu der Mündungsbeschichtung stehenden Schicht, ist dadurch gekennzeichnet, daß die untere Schicht aus einem Kunststoffmaterial besteht, daß das Beschichtungsmittel wenigstens eine disperse Substanz enthält derart, daß der disperse Anteil der Oberflächenenergie des Beschichtungsmittels im wesentlichen dem dispersen Anteil der Oberflächenenergie der unteren Schicht der Siegelfolie entspricht und daß es sich bei der wenigstens einen dispersen Substanz um eine makrocyclische Verbindung mit einer alternierenden Stickstoff-Kohlenstoff-Ringstruktur handelt.

Vorteilhafte Ausführungen der Erfindung sind in den Unteransprüchen angegeben.

Während die aus dem Stand der Technik bekannten Lösungen davon ausgehen, daß die polaren Anteile der Oberflächenenergien von miteinander zu verbindenden Materialien für die Haftung entscheidend sind und sich darauf konzentrieren, daß diese polaren Anteile der Oberflächenenergie gleich groß sind, geht die Erfindung von der Erkenntnis aus, daß nicht allein die polaren Anteile, sondern vielmehr auch die dispersen Anteile der Oberflächenenergien der beteiligten Materialien bei der Optimierung der Adhäsion eine bedeutende Rolle spielen. Es wird daher vorgeschlagen, solche Materialien zu verwenden, deren disperse Anteile gleich groß oder im wesentlichen gleich groß sind.

Das an der Verbindung beteiligte Material der Siegelfolie, genauer gesagt das Material der Verbindungsschicht der Siegelfolie, bleibt dabei vorzugsweise unverändert, da sich dessen Materialeigenschaften als besonders geeignet bewährt haben.

Da jedoch typischerweise die Oberflächen der hier behandelten Glasgefäße bzw. die aus dem Stand der Technik bekannten Mittel zur Mündungsbeschichtung ganz überwiegend polar sind, während die zum Einsatz kommenden Siegelfolien, insbesondere deren Verbindungsschichten, einen nicht unwesentlichen dispersen Anteil aufweisen, ist es eine Grundidee der Erfindung, den dispersen Anteil der Oberflächenenergie des Beschichtungsmittels an den dispersen Anteil der Oberflächenenergie der unteren Schicht der Siegelfolie anzupassen, um die bisher nicht genutzten Bindungsmöglichkeiten dieser unteren Schicht auszuschöpfen.

Da der disperse Anteil in den bekannten Beschichtungsmitteln vergleichsweise niedrig ist, wird vorgeschlagen, diesen derart zu erhöhen, daß er im wesentlichen dem dispersen Anteil der Oberflächenenergie der unteren Schicht der Siegelfolie entspricht. Dies erfolgt vorzugsweise durch eine Veränderung der Zusammensetzung des Beschichtungsmittels, insbesondere durch Zugabe einer den dispersen Anteil der Oberflächenenergie des Beschichtungsmittels erhöhenden dispersen Substanz. Unter einer dispersen Substanz wird dabei eine Substanz verstanden, deren Oberflächenenergie einen nicht zu vernachlässigenden dispersen Anteil aufweist. Die
hier vorzugsweise zum Einsatz kommende disperse Substanz wird weiter unten näher beschrieben.

Durch die Erhöhung des dispersen Anteils des Oberflächenenergie des Beschichtungsmittel derart, daß der Wert des dispersen Anteils der Oberflächenenergie des Beschichtungsmittel im wesentlichen dem Wert des dispersen Anteils der Oberflächenenergie der unteren Schicht der Siegelfolie entspricht, werden die von der Siegelfolie bereitgestellten Dispersionskräfte optimal genutzt. Im Ergebnis ist eine im Vergleich zu der Stempelkraft eines Siegelkopfes deutlich niedrigere Siegelkraft eines Schraubdeckels oder eines anderen geeigneten Behälterverschlusses für eine ordnungsgemäße Versiegelung noch immer ausreichend. Es ist kein zusätzlicher Niederhalter, Stempel oder dergleichen zum Aufbringen einer Druckkraft auf die Siegelfolie erforderlich. Zugleich wird für eine ordnungsgemäße Versiegelung weniger Siegelenergie benötigt. Daher kann die Vorrichtung zum Energieeintrag in die Siegelfolie kleiner dimensioniert sein als vergleichbare, aus dem Stand der Technik bekannte Vorrichtungen. Auch ist der Energieverbrauch dieser Vorrichtung geringer. Schlußendlich läßt sich damit ein sehr sicheres und zuverlässiges Versiegeln realisieren. Trotz der sehr sicheren Verbindung von Siegelfolie und Mündung läßt sich dabei ein einfaches Ablösen der Siegelfolie von der Mündung, wie es beispielsweise bei Glasgefäßen im Kosmetikbereich oftmals gewünscht ist, stets gewährleisten.

Erfolgt hingegen bei Verwendung der neuen Mündungsbeschichtung ein herkömmlicher höherer Energieeintrag in die Siegelfolie und/oder wird eine höhere Druckkraft auf die Siegelfolie aufgebracht, beispielsweise mit Hilfe einer herkömmlichen Kontaktversiegelung, dann erhält man eine extrem feste Verbindung zwischen Siegelfolie und Mündung. Ein einfaches Ablösen der Siegelfolie von der Mündung ist dann nicht mehr möglich. Die Siegelfolie muß in der Regel zerstört werden. Eine derartige feste Versiegelung kann beispielsweise bei Behältern zur Aufnahme von Lebensmitteln gewünscht und von Vorteil sein.

Bei der wenigstens einen dispersen Substanz des Beschichtungsmittels handelt es sich um eine makrocyclische Verbindung mit einer alternierenden Stickstoff-Kohlenstoff-Ringstruktur. Vorzugsweise gehört die wenigstens eine disperse Substanz des Beschichtungsmittels der Gruppe der Phthalocyanine an. Alternativ dazu handelt es sich um ein Phthalocyanin-Derivat.

In einer bevorzugten Ausführungsform der Erfindung beträgt der Anteil der wenigstens einen dispersen Substanz in dem Beschichtungsmittel ca. 10-30 Gew.-%, bevorzugt ca. 15-25 Gew.-%.

In einer weiteren Ausführungsform der Erfindung ist die wenigstens eine disperse Substanz pulverförmig. Sie ist dann vorzugsweise ein weiterer pulverförmiger Bestandteil des Beschichtungsmittels neben folgenden weiteren Bestandteilen: einer oder mehreren pulverförmigen Substanzen aus gemahlenem Glas, einem organischen Öl als Trägersubstanz, einem Harz, um die Haftung des Beschichtungsmittels auf der Mündungsoberfläche zu gewährleisten und einem Netzmittel, um die pulverförmigen Substanzen aus Glas oder Keramik und/oder die wenigstens eine disperse Substanz vor dem Absetzen und Aushärten zu bewahren. Vorzugsweise ist die disperse Substanz ein zusätzlicher Bestandteil des Beschichtungsmittels, wie es in der Patentanmeldung EP 1340726 A1 oder ein zusätzlicher Bestandteil des Beschichtungsmittels, wie es in der Patentanmeldung EP 1452499 A1 beschrieben ist.

Die neuartige Mündungsbeschichtung kann mit verschiedenen Arten von Siegelfolien und/oder verschiedenen Arten von Behälterverschlüssen und/oder verschiedenen Versiegelungsverfahren verwendet werden. Als besonders vorteilhaft hat sich jedoch die Verwendung der neuen Mündungsbeschichtung bei dem oben beschriebenen berührungslosen induktiven Versiegelungsverfahren erwiesen, bei dem die Druckkraft auf die Siegelfolie ausschließlich über einen Schraubdeckel aufgebracht wird. Anstelle eines Schraubdeckels kann dabei jedoch auch ein Verschluß verwendet werde, der auf die Siegelfolie drückt und mit dem Behälter eine Rast-, Schnapp-, Steck- oder Klemmverbindung ausbildet.

Nachfolgend werden ein Verfahren und eine Vorrichtung zum berührungslosen Energieeintrag in eine Siegelfolie beschrieben, die vorteilhafterweise mit der vorliegenden Erfindung und/oder mit der weiter unten beschriebenen Siegelfolie bzw. mit der weiter unten beschriebene Vorrichtung und dem weiter unten beschriebenen Verfahren zu Überprüfung der Versiegelung verwendet werden. Mit diesem Verfahren und dieser Vorrichtung zum berührungslosen Energieeintrag wird ein genau definierter berührungsloser Energieeintrag in eine Siegelfolie ermöglicht.

Eine Grundidee ist es hier, die bisherige Technik des Induktionstunnels, bei der keine eindeutige Zuordnung eines Induktors zu einer oder mehreren Siegelfolien möglich war, aufzugeben und statt dessen einen Induktor oder mehrere Induktoren zu verwenden, die jeweils einer definierten Anzahl von Glasgefäßen zugeordnet sind.

Anstelle eines Induktionstunnels, in dem eine schwankende, jedenfalls nicht notwendigerweise dauerhaft konstante Anzahl von Glasgefäßen für eine in Abhängigkeit von der Abfüllgeschwindigkeit schwankende Zeitdauer einem elektromagnetischen Feld ausgesetzt sind, dessen Verlauf mehr oder weniger unbekannt, jedenfalls aber im Bereich der an den Mündungen anhaftenden Siegelfolien nicht konstant, sondern von Gefäß zu Gefäß unterschiedlich ist, kann mit Hilfe der vorgeschlagenen Zuordnung eines Induktors zu einem oder mehreren Glasgefäßen ein sehr viel genauerer, definierter Energieeintrag in jede einzelne Siegelfolie erfolgen.

Dabei kann nicht nur das elektromagnetische Feld jedes einzelnen Induktors präzise definiert werden. Durch eine genaue Positionierung, Ausrichtung und/oder Bewegung des Induktors und/oder der Glasgefäße zueinander kann eine gleichmäßige, konstante und nachvollziehbare induktive Erwärmung jeder einzelnen Siegelfolie erfolgen.

Zum Siegein, also zum Verbinden der Siegelfolie mit einer Mündung eines Glasgefäßes, wird jeder Induktor einer genau definierten und vorbestimmten Anzahl von Glasgefäßen zugeordnet. Die Siegelfolien dieser definierten Anzahl von Glasgefäßen werden mit Hilfe dieses Induktors gleichzeitig erwärmt. Eine besonders präzise und hochgenaue Zuordnung des von einem Induktor erzeugten elektromagnetischen Feldes zu der Siegelfolie an der Mündung eines Glasgefäßes ist dann möglich, wenn jeder Induktor genau einem Glasgefäß zugeordnet wird.

Bei dem Induktor handelt es sich vorzugsweise um eine Luftspule. In einer Ausführungsform ist diese als Zylinderspule, insbesondere selbsttragend mit schraubenförmig angeordnetem Leiter, ausgeführt. Entsprechend der geometrischen Anforderungen kommt vorzugsweise eine Kreiszylinderspule zur Anwendung. In einer anderen Ausführungsform ist die Luftspule als Kreisringspule ausgeführt. Diese Arten von Spulen erzeugen ein sehr homogenes magnetisches Feld, vor allem im Spuleninneren. Die Feldstärke außerhalb der Spule ist hingegen sehr gering. Aufgrund dieser Eigenschaften sind diese Spulen für die vorgeschlagene Technik besonders geeignet. Es können hohe Leistungsdichten erreicht werden. Auch ist der Wirkungsgrad vergleichsweise hoch. Die Verwendung einer Kreiszylinderspule oder einer Kreisringspule ist auch bereits deshalb von Vorteil, da dadurch die Form des Induktors an die aufgrund der Verwendung eines Schraubdeckels vorgegebene Mündungsgeometrie bzw. die berührungslos zu erwärmende Siegelfolie optimal angepaßt ist.

Ist der Induktor als Luftspule ausgeführt, dann vorzugsweise derart, daß die Mündung des Glasgefäßes, an der die zu erwärmende Siegelfolie anliegt, zumindest teilweise in das Spuleninnere aufnehmbar ist. Anders ausgedrückt läßt sich die Mündung mit der Siegelfolie zumindest teilweise in das Spuleninnere eintauchen. Vorzugsweise ist die Mündung mit der Siegelfolie jedoch vollständig in das Spuleninnere aufnehmbar, so daß die Spule die Mündung in Richtung der Mündungsachse vollständig überstreicht. Ist jedem Induktor genau eine Mündung zugeordnet, dann verläuft die Spulenachse während des Eintauchens der Mündung in das Spuleninnere vorzugsweise koaxial mit der Mündungsachse. Auf diese Weise kann auch bei einem sehr einfachen, symmetrischen Feldaufbau gewährleistet werden, daß der Energieeintrag in die Siegelfolie an allen Stellen des Mündungsrandes gleich ist. Dadurch wird eine besonders sichere Verbindung der Siegelfolie mit der Mündung erreicht.

Wird für die Spule ein elektrischer Leiter mit einem rechteckigen Querschnitt verwendet, so kann das erzeugte Feld besonders genau definiert werden. Wegen der sehr homogenen Abstrahlung ein sehr exakter und vorher bestimmbarer Energieeintrag in die Siegelfolie möglich.

Die Zuordnung eines Induktors zu einem oder mehreren Glasgefäßen kann auf verschiedene Art und Weise erfolgen, vorzugsweise durch eine oder mehrere Einrichtungen zum Bewegen von Induktor und/oder Glasgefäß.

Bereits in einer sehr einfachen Ausführungsform unterscheidet sich die vorgeschlagene Technik von dem aus dem Stand der Technik bekannten Induktionstunnel, bei dem Glasgefäße an fest montierten, unbeweglichen Induktoren vorbeibewegt werden, dadurch, daß der Induktor bewegbar ist. Die Bewegung des Induktors erfolgt dabei relativ zu der Mündung eines oder mehrerer Glasgefäße. Mit Hilfe einer entsprechenden Bewegungseinrichtung bewegt sich der Induktor zu diesem Zweck auf einem exakt definierten Pfad. Während der Bewegung des Induktors auf dieser Bahn kann das Glasgefäß selbst seine Lage verändern, beispielsweise auf einem Förderband von einer Position der Abfüllanlage zu einer anderen Position verbracht werden, oder aber das Glasgefäß verändert während der Bewegung des Induktors bzw. während des Energieeintrags seine Position nicht.

In einer anderen Ausführungsform sind eine oder mehrere Bewegungseinrichtungen derart zum Bewegen von Induktor und/oder Glasgefäß ausgeführt, daß eine Relativbewegung von Induktor und Glasgefäß in Richtung der Mündungsachse erfolgt. Anders als bei dem aus dem Stand der Technik bekannten Induktionstunnel, bei dem eine Bewegung der Glasgefäße relativ zu den feststehenden Induktoren in der Regel quer zu den Mündungsachsen erfolgt, ist bei einer Relativbewegung in Richtung der Mündungsachsen wegen der hierdurch möglichen präzisen Zuordnung der erzeugten Induktionsfelder zu den einzelnen Siegelfolien ein besonders genaues und sicheres Verschließen der Gefäßmündungen möglich.

In einer besonders bevorzugten Ausführungsform erfolgt, wie aus dem Stand der Technik bekannt, eine horizontale Bewegung der Glasgefäße durch die Siegelanlage, beispielsweise auf einem Förderband, mit Hilfe einer Förderschnecke oder dergleichen. Zugleich wird mit Hilfe einer weiteren Bewegungseinrichtung eine Anzahl von Induktoren bewegt, und zwar derart, daß sie während der Fortbewegung der Glasgefäße vertikal über die Mündungen gestülpt werden. Die Spulenachsen der Induktoren verlaufen dabei vorzugsweise parallel zu den jeweiligen Mündungsachsen.

Eine Steuereinheit dient zur Abstimmung der Bewegungen der Bewegungseinheiten und zur kontrollierten Ansteuerung der Induktoren. Vorteilhafterweise läßt sich die Stärke der erzeugten Felder, die Verweildauer der Induktoren an den Mündungen der Glasgefäße, die Geschwindigkeit, mit der die Induktor die Mündung überstreichen mit Hilfe der Steuereinheit aufeinander abstimmen und in Abhängigkeit von der Abfüligeschwindigkeit steuern oder regeln.

In einer besonders bevorzugten Ausführungsform ist die Form des Induktors an die Geometrie des Glasgefäßes derart angepaßt, daß der Induktor zweimal vollständig den Mündungsbereich überstreicht, nämlich ein erstes Mal, wenn er sich aus seiner Ausgangsposition kommend dem Glasgefäß nähert und eine Endposition unterhalb der Mündungsöffnung einnimmt und ein zweites Mal, wenn er aus dieser Endposition, die zugleich den Umkehrpunkt der Bewegung des Induktors darstellt, herausgeführt wird und die Mündung erneut überstreicht, um in seine Ausgangsposition zurückzukehren. Bei dieser Ausführungsform ist es durch eine geeignete Einstellung der Verfahrensparameter, insbesondere Ort, Zeit und Energiemenge, wegen des zweifachen Passierens der Mündung besonders einfach möglich, einen hochgenauen Energieeintrag in die Siegelfolie vorzunehmen. Mit Hilfe eines definierten Ansteuerungsregimes ist es beispielsweise möglich, die Menge der eingebrachten Energie und damit den Grad der Erwärmung in Abhängigkeit von der Position des Induktors relativ zum Mündungsrand zu verändern. Insbesondere läßt sich eine vorteilhafte Verweildauer des Induktors am Umkehrpunkt und/oder an beliebigen anderen Punkten auf der Bewegungsbahn des Induktors vorsehen.

Darüber hinaus kann es von Vorteil sein, wenn der Energieeintrag beispielsweise nur während des zweiten Vorbeilaufes erfolgt, wenn also der Induktor von seiner Endposition wieder in die Ausgangsposition zurückbewegt wird. In diesem Fall kann in der Endposition der Induktor angesteuert und solange gewartet werden, bis sich das gewünschte Feld vollständig aufgebaut hat, bevor der Induktor bei eingeschaltetem Feld über die Mündung hinwegbewegt wird. Damit werden unbeabsichtigte Schwankungen des Feldes während des Energieeintrages vermieden. Alternativ kann der Energieeintrag lediglich während des ersten Vorbeilaufs erfolgen.

Mit der vorgeschlagenen Technik kann ein kontrolliertes Einbringen einer präzise definierten Energiemenge in die Siegelfolie sichergestellt werden. Ein Verbrennen der Folie durch eine zu starke Erwärmung wird dadurch ebenso vermieden, wie eine unzureichende Energiezufuhr, bei der sich die Folie nicht vollständig mit der Mündung verbindet.

Das Verfahren bzw. die Vorrichtung zum berührungslosen Energieeintrag ist nicht auf die Verwendung von Schraubdeckeln beschränkt. Statt dessen können auch andere geeignete Verschlüsse verwendet werden.

Nachfolgend wird eine Siegelfolie sowie eine Vorrichtung und ein Verfahren zu Überprüfung der Versiegelung der Mündung von offenen Glasgefäßen durch eine Siegelfolie beschrieben, die vorteilhafterweise mit der vorliegenden Erfindung und/oder mit dem weiter oben beschriebenen Verfahren und der weiter oben beschriebenen Vorrichtung zum berührungslosen Energieeintrag in eine Siegelfolie verwendet werden. Mit dieser Siegelfolie bzw. mit dieser Vorrichtung und diesem Verfahren zur Überprüfung der Siegelfolie wird eine Technik bereitgestellt, die eine zerstörungsfreie Überprüfung der Versiegelung ermöglicht.

Eine Grundidee ist es dabei, die Siegelfolie derart schichtweise aufzubauen, daß der Schichtaufbau einen Kondensator bildet. Hierzu umfaßt der Schichtaufbau wenigstens eine erste elektrisch leitfähige Schicht, wenigstens eine zweite elektrisch leitfähige Schicht und wenigstens eine zwischen der ersten elektrisch leitfähigen Schicht und der zweiten elektrisch leitfähigen Schicht angeordnete elektrisch isolierende Schicht derart, daß die elektrisch leitfähigen Schichten als Elektroden des Kondensators und die elektrisch isolierende Schicht als Dielektrikum des Kondensators dienen.

Weist dann die elektrisch isolierende Schicht eine die Kapazität des Kondensators beeinflussende Eigenschaft auf, die durch einen Energieeintrag in die Siegelfolie veränderbar ist, so kann nach dem Versiegelungsvorgang, der typischerweise mit einem Energieeintrag in die Siegelfolie verbunden ist, durch eine Messung und eine Auswertung des Meßergebnisses ermittelt werden, ob eine ordnungsgemäße Versiegelung der Mündung vorliegt, beispielsweise indem ein gemessener Ist-Wert mit einem Soll-Wert verglichen wird. Gemessen wird dabei eine Eigenschaft des Kondensators, vorzugsweise eine elektrische Eigenschaft des Kondensators, insbesondere die geänderte Kapazität des Kondensators, und/oder eine Eigenschaft eines von dem Kondensator beeinflußten oder mit dem Kondensator in Wechselwirkung stehenden Systems, insbesondere die Stärke des Einflusses des Kondensators auf ein elektrisches oder magnetisches Meßfeld. In einer Ausführungsform weist die Siegelfolie eine Spule auf, die zusammen mit dem Kondensator einen elektrischen Schwingkreis bildet, dessen Resonanzfrequenz von der Kapazität des Kondensators abhängig ist. In einer anderen Ausführungsform wird die den Kondensator aufweisende Siegelfolie einem Meßfeld ausgesetzt, ohne daß der Kondensator mit einer Spule als zusätzliches Bauelement versehen ist. Mit anderen Worten ist das Vorhandensein eines Schwingkreises an der Siegelfolie für eine Messung der Beeinflussung des Meßfeldes bzw. der Wechselwirkung der Siegelfolie mit dem Meßfeld nicht zwingend erforderlich.

Die Messung erfolgt mit Hilfe einer geeigneten Meßeinrichtung. Aufbau und Funktion derartiger Meßeinrichtungen sind dem Fachmann bekannt. Das Messen erfolgt dabei vorzugsweise berührungslos, so daß der Schraubdeckel oder ein anderer Verschluß für die Überprüfung der Versiegelung nicht entfernt werden muß. Es ist daher möglich, die Überprüfung durchzuführen, ohne die Siegelfolie und damit den Verschluß der Mündung zu zerstören. Somit muß die Überprüfung nicht auf Strichproben beschränkt bleiben. Statt dessen kann ein beliebiger Anteil aller Versiegelungen einer Abfüllanlage überprüft werden. Insbesondere ist es auch möglich, alle Versiegelungen zu überprüfen. Werden alle Glasgefäße aussortiert, die nicht ordnungsgemäß versiegelt sind, kann die geprüfte ordnungsgemäße Versiegelung der gesamten Produktion garantiert werden.

Bei der durch Energieeintrag in die Siegelfolie veränderbare Eigenschaft der elektrisch isolierenden Schicht handelt es sich vorzugsweise um die Schichtdicke der elektrisch isolierenden Schicht. Zu diesem Zweck wird für die elektrisch isolierenden Schicht ein Material verwendet, welches sich bei einem Energieeintrag, insbesondere bei einer Erwärmung der Schicht, wie sie bei einer ordnungsgemäßen Versiegelung stattfindet, derart verändert, daß sich die Dicke der Schicht und damit die Stärke des Dielektrikums in einem Maße verändert, daß sich der Abstand der Elektroden zueinander derart verändert, daß eine signifikante Änderung der Kapazität des Kondensators die Folge ist.

Die Erwärmung der elektrisch isolierenden Schicht, welche zu einer Veränderung des Dielektrikums führt, beruht dabei darauf, daß durch den Energieeintrag in die Siegelfolie bei der Versiegelung der Mündung auch ein Energieeintrag in das Dielektrikum erfolgt.

In einer Ausführungsform wird mit Hilfe eines Lesegerätes oder Detektors ein magnetisches Wechselfeld in einem geeigneten Frequenzbereich erzeugt. Befindet sich dieses Meßfeld in ausreichender Nähe zur Siegelfolie und bildet der Kondensator zusammen mit einer Spule einen Schwingkreis, so wird über die Spule des Schwingkreises Energie aus dem Meßfeld in den Schwingkreis eingekoppelt. Entspricht die Frequenz des Wechselfeldes der Resonanzfrequenz des Schwingkreises, wird der Schwingkreis zu einer Resonanzschwingung angeregt. Der dadurch im Schwingkreis fließende Strom wirkt seiner Ursache, also dem von außen einwirkenden magnetischen Wechselfeld, entgegen. Dieser Effekt führt letztendlich zu einer Abschwächung der meßbaren magnetischen Feldstärke. In einer optionalen Sensorspule ist eine Änderung der induzierten Spannung meßbar, sobald ein resonanter Schwingkreis in das magnetische Feld der Generatorspule eingebracht wird. Durch eine gezielte Veränderung der Frequenz des Erregerfeldes kann somit die Resonanzfrequenz des Schwingkreises und damit die Kapazität des Kondensators des Schwingkreises ermittelt werden. Eine detektierbare Beeinflussung des Meßfeldes wird auch dann erreicht, wenn die Siegelfolie keinen Schwingkreis aufweist, sondern sich lediglich der Kondensator in dem Meßfeld befindet.

In beiden Fällen läßt sich mit Hilfe einer geeigneten Meßmethode feststellen, wie stark der eine geänderte Kapazität aufweisende Kondensator Kenngrößen bzw. Eigenschaften des Meßfeld beeinflußt, im Vergleich zu der Beeinflussung des Meßfeldes durch den Kondensator vor einem Energieeintrag. Dabei befindet sich der Kondensator entweder innerhalb des Meßfeldes oder er ist derart in der Nähe des Meßfeldes angeordnet, daß die gewünschte meßbare Änderung der Feldeigenschaft eintritt.

Aus den Meßergebnissen kann dann ermittelt werden, ob ein gewünschter, ordnungsgemäßer Energieeintrag erfolgt ist oder ob zu viel Energie in die Siegelfolie eingebracht wurde, so daß die Siegelfolie verbrannt ist, oder aber ob zu wenig Energie in die Siegelfolie eingebracht wurde, so daß die Verbindung mit der Mündung nicht vollständig oder nicht dauerhaft ist. Für die Auswertung des Meßergebnisses kommt eine geeignete Auswerteeinrichtung zum Einsatz, beilspielsweise eine mit einer Schnittstelle zur Übergabe der Meßergebnisse ausgestattete Datenverarbeitungseinheit, in der die gewünschte Funktionalität entweder in Form von Computerhardware oder in Form von Computersoftware oder in einer Kombination aus Hardware und Software verwirklicht wird. Aufbau und Funktion derartiger Auswerteinrichtungen sind dem Fachmann bekannt.

Bei einer anderen Ausführungsform handelt es sich bei der durch Energieeintrag in die Siegelfolie veränderbare Eigenschaft der elektrisch isolierenden Schicht um eine Materialeigenschaft des Dielektrikums, beispielsweise dessen Dielektrizitätszahl.

In einer Ausführungsform wird der gemessene Ist-Wert mit einem Soll-Wert verglichen. Dabei können erlaubte Abweichungen von dem Soll-Wert vorab festgelegt werden. Bewegt sich der Meßwert in einem zulässigen Toleranzbereich um den Referenzwert, wird die Versiegelung als gut bewertet. Es ist jedoch nicht zwingend notwendig, die Kapazität des Kondensators und/oder die Beeinflussung des Meßfeldes in absoluten Werten zu erfassen. Für eine Bewertung des Versiegelung kann es ausreichend sein, die Veränderung der Kapazität und/oder die Beeinflussung des Meßfeldes gegenüber einem Ausgangswert zu ermitteln. Dabei kann es sich bei dem Ausgangswert um einen vor dem Energieeintrag ermittelten, gegebenenfalls auch gefäßindividuellen Meßwert der Kapazität und/oder einer Meßfeldeigenschaft oder um einen auf der Grundlage von Berechnungen und/oder früheren Messungen festgesetzten Wert handeln, beispielsweise um einen aus einer Meßreihe ermittelten Durchschnittswert.

In einer besonders bevorzugten Ausführungsform ist wenigstens ein Teil des Schichtaufbaus, insbesondere eine der elektrisch leitfähigen Schichten oder ein Teil davon, als Grifflasche ausgebildet. Vorteilhafterweise ist zu diesem Zweck entweder die mündungsferne elektrisch leitfähige Schicht oder aber ein Verbund aus der mündungsfernen elektrisch leitfähigen Schicht und der elektrisch isolierenden Schicht entsprechend ausgebildet. Die mündungsnahe elektrisch leitfähige Schicht bzw. derjenige Teil des Schichtaufbaus, der nicht als Grifflasche ausgebildet ist, bleibt hingegen unverändert, um einen sicheren Verschluß der Mündung zu gewährleisten.

Für ein sicheres Abziehen der gesamten Siegelfolie von der Mündung ist es wesentlich, daß nur ein Teilbereich der Schicht oder des Schichtverbundes als Grifflasche aus dem Schichtaufbau herausschwenkbar ist, während ein anderer Teilbereich fest mit dem übrigen Schichtaufbau verbunden bleibt. Bei diesem verbleibende Teilbereich kann es sich auch lediglich um einen schmalen Verbindungsbereich, beispielsweise eine Verbindungslinie, handeln. Mit anderen Worten kann beispielsweise nur ein Viertel oder ein Drittel der Oberseite der Siegelfolie als Grifflasche ausgeführt sein. Die Siegelfolie kann aber auch derart ausgeführt sein, daß nahezu die gesamte Oberseite der Siegelfolie als Grifflasche von dem übrigen Schichtaufbau abgehoben werden kann und die Grifflasche nur auf einer Seite der Mündung mit dem verbleibenden Teil der Siegelfolie im Bereich des Folienrandes verbunden ist.

Während in einer Ausführungsform die Siegelfolie durchgehend den beschriebenen Schichtaufbau aufweist, ist die Siegelfolie in einer anderen Ausführungsform derart ausgeführt, daß sich an einen ersten, den Schichtaufbau aufweisenden Folienteilbereich ein zweiter Folienteilbereich anschließt, der diesen Schichtaufbau nicht aufweist.

Die Verwendung der neuartige Siegelfolie ist nicht auf Schraubdeckel beschränkt. Die Siegelfolie kann auch in Verbindung mit anderen Verschlüssen verwendet werden.

Auch kann die Siegelfolie bei unterschiedlichen Versiegelungsverfahren eingesetzt werden. Eine Kombination des zuvor beschriebenen Verfahrens zum berührungslosen Energieeintrag mit der neuartigen Siegelfolie ist jedoch besonders vorteilhaft. Denn durch eine Relativbewegung von Induktor und Mündung in Richtung der Mündungsachse wird sichergestellt, daß nicht nur die mündungsferne elektrisch leitfähige Schicht und gegebenenfalls eine Grifflasche, sondern auch die mündungsnahe elektrisch leitfähige Schicht erwärmt wird. Der Energieeintrag in diese mündungsnahe elektrisch leitfähige Schicht stellt dann die für die Verbindung der reaktiven Komponenten der Mündungsbeschichtung mit der Verbindungsschicht notwendige Erwärmung der Verbindungsschicht sicher, welche sich an die mündungsnahe elektrisch leitfähige Schicht anschließt und die Siegelfolie in Richtung Mündung abschließt.

Erfolgt ein, vorzugsweise berührungsloser, induktiver Energieeintrag, wie beispielsweise mit dem oben beschrieben Verfahren, kann die Überprüfung der ordnungsgemäßen Versiegelung während des Energieeintrags bzw. unmittelbar im Anschluß an diesen Energieeintrag dadurch erfolgen, daß das von dem Induktor zur induktiven Erwärmung der Siegelfolie erzeugte Feld zugleich als Meßfeld dient. Anders ausgedrückt wirkt sich die durch die Erwärmung hervorgerufene Veränderung des Dielektrikums unmittelbar auf das Induktorfeld aus. Durch geeignete Meßmittel kann somit eine unmittelbare Rückwirkung der Erwärmung bestimmt und damit eine Antwort der Siegelfolie auf die eingebrachte Energie ermittelt werden. Erfolgt die Überprüfung der Versiegelung zu einem späteren Zeitpunkt, kann auch eine andere Meßvorrichtung mit einem speziellen Meßfeld verwendet werden, das sich von dem Feld zur induktiven Erwärmung unterscheidet.

Mit der vorliegenden Technik läßt sich nicht nur eine Überprüfung der korrekten Versiegelung durchführen, ohne daß dafür die Versiegelung zerstört werden muß. Da die Überprüfung berührungslos durchführbar ist, kann sie auch am fertigen Produkt erfolgen, d. h. nach Abschluß des Abfüllvorgangs, wenn das Glasgefäß bereits vollständig verschlossen und unter Umständen auch bereits verpackt ist. Die Überprüfung der Versiegelung muß nicht in unmittelbarem räumlichen oder zeitlichen Zusammenhang mit der Abfüllung und Versiegelung der Glasgefäße stehen. Sie kann auch zu einem späteren Zeitpunkt durchgeführt werden.

Unter einer "elektrisch isolierenden Schicht" wird verstanden, daß die elektrischen Eigenschaften des Schichtmaterials für die Anwendung als Dielektrikum in einem Kondensator geeignet sind. Eine "elektrisch isolierende Schicht" kann daher aus einer elektrisch nicht leitenden oder auch aus einer elektrisch schwach leitenden, nichtmetallischen Substanz bestehen.

Ein Ausführungsbeispiel der Erfindung wird nachfolgend anhand der Zeichnungen näher erläutert. Hierbei zeigen:
- Fig. 1: einen Induktionstunnel (Stand der Technik),
- Fig. 2: einen Teil der neuen Vorrichtung mit drei Induktoren,
- Fig. 3: einen Teil eines Glasgefäßes und einen Deckel (aufgeschnitten),
- Fig. 4: einen Induktor in Draufsicht,
- Fig. 5: eine Darstellung der Komponenten der Vorrichtung zum berührungslosen Energieeintrag,
- Fig. 6: eine Siegelfolie (Stand der Technik) im Schnitt,
- Fig. 7: eine Siegelfolie mit neuem Aufbau im Schnitt,
- Fig. 8: eine Siegelfolie mit Grifflasche in Draufsicht,
- Fig. 9: eine Siegelfolie mit Grifflasche im Schnitt,
- Fig. 10: eine Darstellung der Komponenten der Vorrichtung zur Überprüfung der Versiegelung.

Sämtliche Figuren zeigen die Erfindung nicht maßstabsgerecht, dabei lediglich schematisch und nur mit ihren wesentlichen Bestandteilen. Gleiche Bezugszeichen entsprechen dabei Elementen gleicher oder vergleichbarer Funktion.

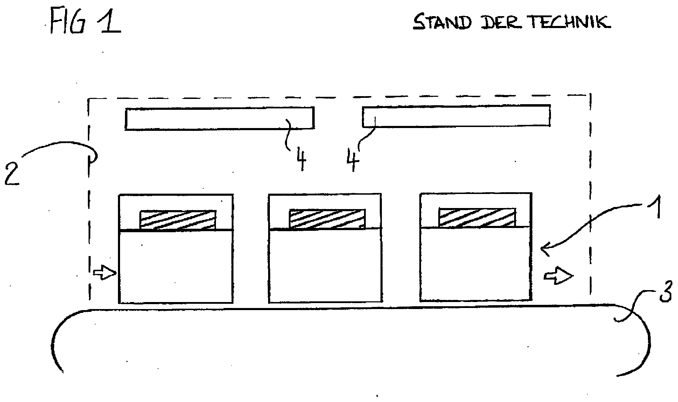

Mit Hilfe der Fig. 1 bis 5 wird zunächst ein Ausführungsbeispiel eines Verfahrens zum berührungslosen Energieeintrag in eine Siegelfolie und ein Ausführungsbeispiel einer Vorrichtung zum berührungslosen Energieeintrag in eine Siegelfolie erläutert.

Im Stand der Technik werden zur berührungslosen, indirekten Erwärmung der Siegelfolien die gefüllten, verschlossenen, jedoch noch nicht versiegelten Glasgefäße 1 durch einen Induktior.stunnel 2 bewegt, wie in Fig. 1 abgebildet. Die Glasgefäße 1 stehen dabei auf einem Förderband 3. In dem Induktionstunnel 2 werden durch mehrere ortsfeste Induktoren 4 eine Anzahl elektromagnetischer Felder erzeugt. Eine Zuordnung der Induktoren 4 zu ausgewählten Glasgefäßen 1 ist nicht vorgesehen.

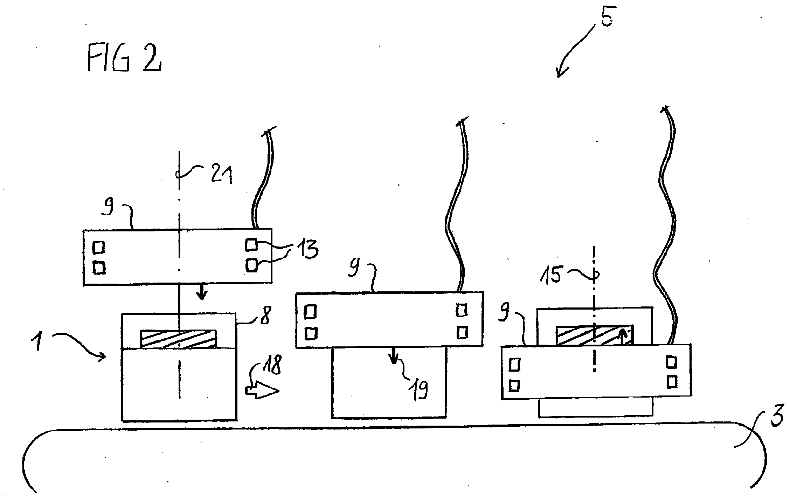

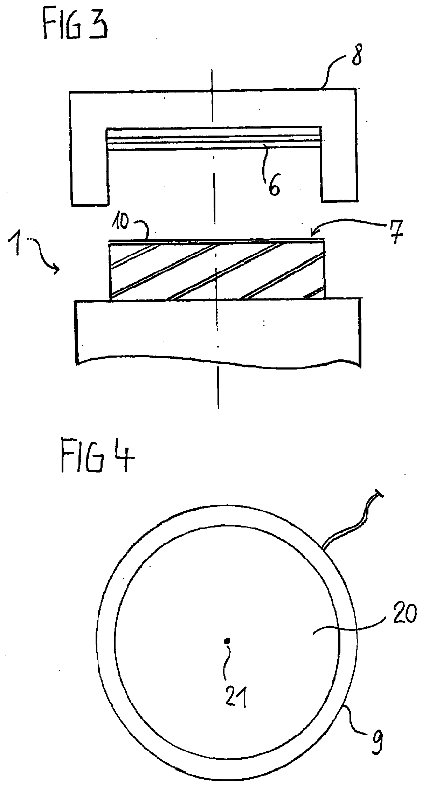

In einem Ausführungsbeispiel der Erfindung wird eine Vorrichtung 5 zum berührungslosen Energieeintrag in eine Siegelfolie 6 verwendet, wie sie in Fig. 2 dargestellt ist. Die Siegelfolie 6 liegt dabei an der mit einer Mündungsbeschichtung 10 versehenen Mündung 7 eines offenen Glasgefäßes 1 an, siehe Fig. 3. Dort ist jedoch aus Gründen der Übersichtlichkeit der Schraubdeckel 8, in dem die Siegelfolie 6 angebracht ist, von der Mündung beabstandet dargestellt.

Zum Verbinden der Siegelfolie 6 mit der Oberfläche der Mündung 7 dienen als Komponenten der Vorrichtung 5 eine Anzahl Induktoren 9, die zur induktiven Erwärmung der Siegelfolie 6 ausgebildet sind. Eine erste Bewegungseinrichtung in Gestalt eines Förderbandes 3 dient zur gleichzeitigen Bewegung mehrerer Glasgefäße 1 von einem ersten Punkt zu einem zweiten Punkt der Abfüllanlage (nicht dargestellt). Eine elektromotorisch angetriebene Positioniereinheit 11 dient als zweite Bewegungseinrichtung zur gemeinsamen Bewegung einer Anzahl von Induktoren 9 derart, daß diese Induktoren 9 einer definierten Anzahl von Glasgefäßen 1 zugeordnet werden. Bei den Bewegungseinrichtungen 3, 11 handelt es sich typischerweise um einfache mechanische, elektromechanische und/oder hydraulisch oder pneumatisch betriebene Systeme mit geeigneten, dem Fachmann bekannten Anpassungen an die hier zu bewegenden Objekte 1, 9.

In Fig. 2 sind verschiedene Phasen der Bewegung eines Induktors 9 dargestellt. In der Praxis bewegt sich immer eine Gruppe von Induktoren 9 synchron, wobei jedem Glasgefäß 1 und somit jeder Mündung 7 genau ein Induktor 9 zugeordnet ist. Beispielsweise bewegen sich sechs einer ersten Gruppe zugeordnete Induktoren 9 synchron zur Erwärmung von sechs Siegelfolien 6, die an den Mündungen 7 von sechs benachbarten Glasgefäßen 1 anliegen. Nach dem Energieeintrag bewegt sich diese erste Gruppe von Induktoren 9 in eine Startposition zurück und weitere sechs Glasgefäße 1 werden bearbeitet. Parallel zu der ersten Gruppe können weitere Gruppen von Induktoren 9 vorgesehen sein.

Bei den Induktoren 9 handelt es sich um selbsttragende Luftspulen in Gestalt von Kreiszylinderspulen, siehe auch Fig. 4. Die Spulen sind derart ausgeführt, sie vollständig über die Mündungen 7 der Glasgefäße 1, an denen die zu erwärmende Siegelfolien 6 anliegen, gefahren werden können. Mit anderen Worten tauchen die Mündungen 7 vollständig in das Spuleninnere 20 ein.

In Fig. 2 sind die Induktorengehäuse 12 transparent dargestellt. Daher ist erkennbar, daß die Spulen elektrische Leiter 13 mit einem rechteckigen Querschnitt verwenden.

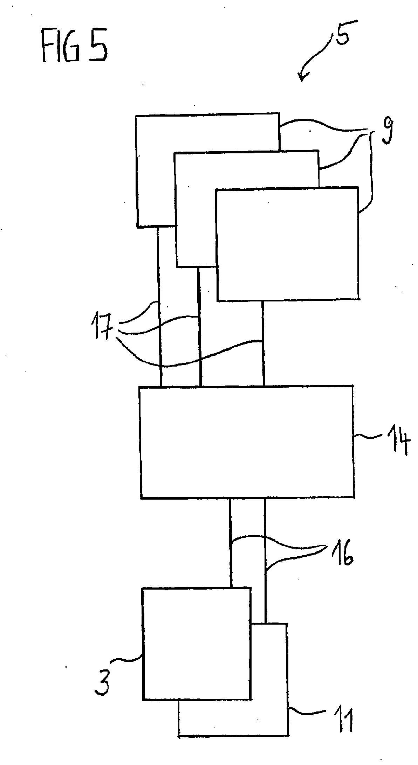

Mit Hilfe einer Steuereinheit 14, siehe Fig. 5, werden die Bewegungseinrichtungen 3, 11 und die Induktoren 9 derart kontrolliert, daß jeweils eine Relativbewegung von Induktor 9 und Glasgefäß 1 in Richtung der Mündungsachse 15 erfolgt. Die Steuereinheit 14 ist mit den Bewegungseinrichtungen 3, 11 über erste Anschlußleitungen 16 und mit den Induktoren 9 über zweite Anschlußleitungen 17 verbunden. Die Steuereinheit 14 ist vorteilhafterweise an eine zentrale Anlagensteuerung (nicht dargestellt) der Abfüllanlage angeschlossen und tauscht mit dieser zweckmäßig Daten aus.

Während der Horizontalbewegung 18 der Glasgefäße 1 werden die Induktoren 9 jeweils einer Gruppe vertikal über die Mündungen 7 der dieser Gruppe zugeordneten Glasgefäße 1 gestülpt. Die Bewegung 19 der Induktoren 9 wird derart ausgeführt, daß die Spulenachsen 21 koaxial zu den Mündungsachsen 15 verlaufen.

Zugleich steuert oder regelt die Steuereinheit 14 alle erforderlichen Verfahrensparameter, insbesondere die Stärke der erzeugten Felder, die Verweildauer der Induktoren 9 an definierten Punkten der Bewegungsbahn und die Geschwindigkeit, mit der die Induktoren 9 sich bewegen. Dabei können die Induktoren 9 beispielsweise derart kontrolliert werden, daß sie zunächst den Bereich der Mündung 7 ein erstes Mal vollständig überstreichen, wenn sie sich aus ihrer Ausgangsposition kommend den Glasgefäßen 1 nähern und ihre Endposition unterhalb der Mündungsöffnung einnehmen. Ein Induktor 9 in einer Ausgangsposition ist in Fig. 2 links dargestellt. Ein Induktor 9 in der Endposition ist in Fig. 2 rechts dargestellt. Anschließend überstreichen die Induktoren ein zweites Mal vollständig den Mündungsbereich, wenn sie aus diesen Endpositionen herausgeführt werden, um in ihre Ausgangspositionen zurückzukehren. Dabei kann es vorgesehen sein, daß die Induktoren 9 im Bereich der Mündung 7 für eine bestimmte Zeit verweilen. Eine solche Position ist in Fig. 2 in der Mitte dargestellt.

Zusammenfassend ist das Verfahren zum berührungslosen Energieeintrag in eine an der Mündung 7 eines offenen Glasgefäßes 1 anliegende Siegelfolie 6 zum Verbinden der Siegelfolie 6 mit der Mündung 7 mit Hilfe eines zur induktiven Erwärmung der Siegelfolie 6 ausgebildeten Induktors 9 dadurch gekennzeichnet, daß der Induktor 9 einer definierten Anzahl von Glasgefäßen 1 zugeordnet ist.

Das Verfahren ist vorzugsweise dadurch gekennzeichnet, daß der Induktor 9 bewegt wird.

Das Verfahren ist vorzugsweise gekennzeichnet durch eine Relativbewegung zwischen dem Induktor 9 einerseits und einem oder mehreren Glasgefäßen 1 andererseits in Richtung der Mündungsachse 15.

Die Vorrichtung 5 zum berührungslosen Energieeintrag in eine an der Mündung 7 eines offenen Glasgefäßes 1 anliegende Siegelfolie 6 zum Verbinden der Siegelfolie 6 mit der Mündung 7, mit einem zur induktiven Erwärmung der Siegelfolie 6 ausgebildeten Induktor 9, ist gekennzeichnet durch eine Bewegungseinrichtung 3, 11 zur Bewegung des Induktors 9 und/oder zur Bewegung eines oder mehrerer Glasgefäße 1, welche Bewegungseinrichtung 3, 11 zur Zuordnung des Induktors 9 zu einer definierten Anzahl von Glasgefäßen (1) ausgebildet ist.

Die Vorrichtung ist vorzugsweise dadurch gekennzeichnet, daß die Bewegungseinrichtung 11 zum Bewegen des Induktors 9 ausgebildet ist.

Die Vorrichtung ist vorzugsweise dadurch gekennzeichnet, daß die Bewegungseinrichtung 3, 11 zum Erzeugen einer Relativbewegung zwischen dem Induktor 9 einerseits und einem oder mehreren Glasgefäßen 1 andererseits in Richtung der Mündungsachse 15 ausgebildet ist.

Die Vorrichtung ist vorzugsweise dadurch gekennzeichnet, daß der Induktor 9 als Luftspule ausgeführt ist derart, daß die Mündung 7 eines oder mehrerer Glasgefäße 1 zumindest teilweise in das Spuleninnere 20 aufnehmbar ist.

Die Vorrichtung ist vorzugsweise dadurch gekennzeichnet, daß der Induktor 9 für eine Zuordnung zu genau einem Glasgefäß 1 ausgebildet ist.

Die Vorrichtung ist vorzugsweise dadurch gekennzeichnet, daß die Bewegungseinrichtung 3, 11 derart ausgebildet ist, daß bei einer Relativbewegung von Induktor 9 und Glasgefäß 1 die Spulenachse 21 koaxial zu der Mündungsachse 15 verläuft.

Die Vorrichtung ist vorzugsweise dadurch gekennzeichnet, daß der Induktor 9 einen rechteckigen Leiterquerschnitt aufweist.

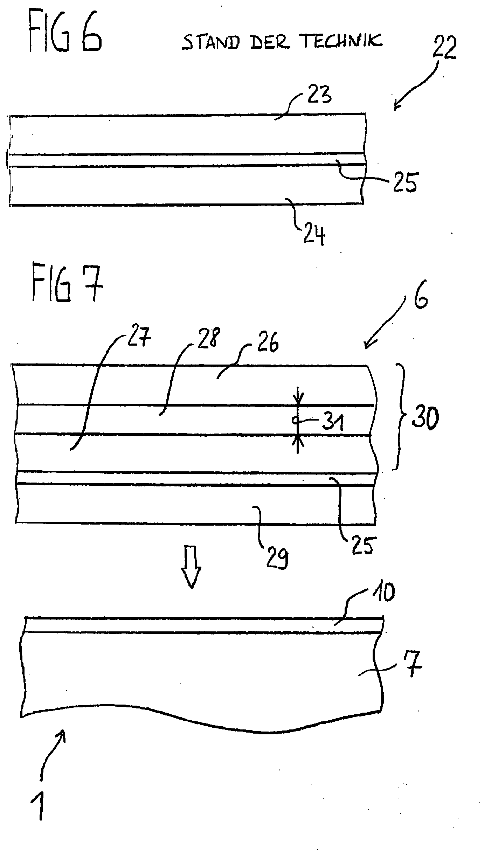

Nachfolgend wird in Verbindung mit den Fig. 6 bis 10 ein Ausführungsbeispiel einer Siegelfolie sowie ein Ausführungsbeispiel einer Vorrichtung und eines Verfahrens zu Überprüfung der Versiegelung der Mündung von offenen Glasgefäßen durch eine Siegelfolie beschrieben.

Eine Siegelfolie 22, wie sie aus dem Stand der Technik bekannt ist, zeigt Fig. 6. Sie umfaßt eine Oberschicht 23 aus einem Aluminiummaterial und eine als Verbindungsschicht dienende Unterschicht 24 aus einem Kunststoffmaterial. Ober- und Unterschicht 23, 24 sind über einen Haftvermittler als Zwischenschicht 25 miteinander verbunden.

In Fig. 7 ist der Aufbau der erfindungsgemäßen Siegelfolie 6 in einer bevorzugten Ausführungsform dargestellt. Die Siegelfolie 6 ist schichtweise aufgebaut derart, daß ein Kondensator 30 gebildet wird. Der Schichtaufbau umfaßt eine erste (mündungsferne) elektrisch leitfähige Schicht 26, eine zweite (mündungsnahe) elektrisch leitfähige Schicht 27, die der Oberschicht 23 entspricht, und eine zwischen der ersten elektrisch leitfähigen Schicht 26 und der zweiten elektrisch leitfähigen Schicht 27 angeordnete elektrisch isolierende Schicht 28, wobei die elektrisch leitfähigen Schichten 26, 27 als Elektroden des Kondensators 30 und die elektrisch isolierende Schicht 28 als Dielektrikum des Kondensators 30 dienen. Unter der zweiten elektrisch leitfähigen Schicht 27 ist wieder eine Schicht 29 aus einem Kunststoffmaterial vorgesehen, die der Unterschicht 24 entspricht, wobei diese beiden Schichten 27, 29, wie aus dem Stand der Technik bekannt, über einen Haftvermittler als Zwischenschicht 25 miteinander verbunden sind. Die Kunststoffschicht 29 der Siegelfolie 6 verbindet sich während des Energieeintrags bei der Versiegelung mit den reaktiven Komponenten einer auf der Mündung 7 des Glasgefäßes 1 angebrachten Mündungsbeschichtung 10.

Bei den elektrisch leitfähigen Schichten 26, 27 handelt es sich vorzugsweise um metallische Schichten, insbesondere um Schichten aus einem Aluminiummaterial. Die als Dielektrikum des Kondensators 30 dienenden elektrisch isolierende Schicht 28 besteht vorzugsweise aus einem geeigneten Kunststoffmaterial. Als besonders geeignet hat sich dabei die Verwendung von Hart-Polyethylen, kurz PE-HD (HDPE), herausgestellt. Dabei handelt es sich vorteilhafterweise um das gleiche Material, aus dem auch die Kunststoffschicht 29 besteht, mit der die Siegelfolie 6 auf der Mündung 7 anliegt. Wesentlich bei der Auswahl eines geeigneten Materials für das Dielektrikum 28 ist, daß dieses Material eine die Kapazität des Kondensators 30 beeinflussende Eigenschaft aufweist, die durch einen Energieeintrag in die Siegelfolie 6 veränderbar ist.

In einer Ausführungsform der Erfindung handelt es sich bei der Eigenschaft des Dielektrikums 28 um die Schichtdicke der elektrisch isolierenden Schicht. Während des Energieeintrags in die Siegelfolie 6 beim Versiegeln der Mündung 7 nimmt die Schichtdicke 31 des Dielektrikums 28 ab. Dadurch verändert sich der Abstand der beiden als Elektroden des Kondensators 30 dienenden elektrisch leitfähigen Schichten 26, 27 und damit die Kapazität des Kondensators 30.

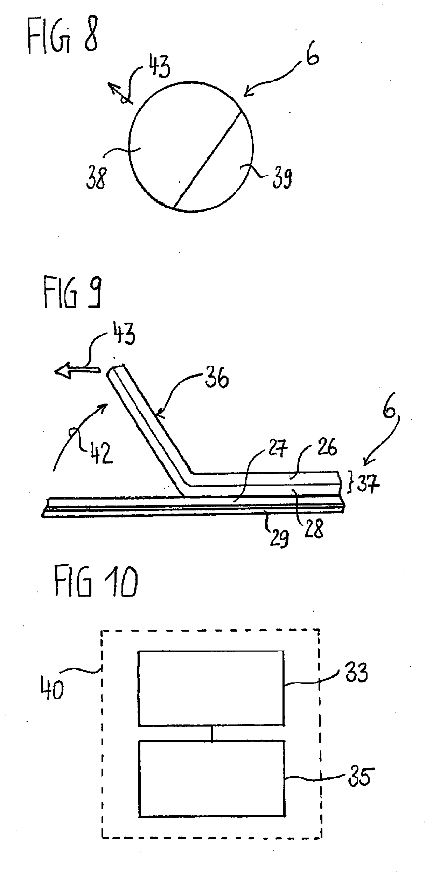

In einer Ausführungsform der Erfindung erfolgt das Messen des Einflusses des Kondensators 30 auf ein mit Hilfe einer Meßeinrichtung 33, siehe Fig. 10, wobei die Meßeinrichtung 33 beispielsweise einen für die Messung geeigneten Meßfeldgenerator mit Vorrichtungen zum Erfassen der Feldeigenschaften aufweist. Zum Messen der Beeinflussung des Meßfeldes durch den Kondensator 30 wird entweder die Meßeinrichtung 33 in die Nähe jeder einzelnen Mündung 7 gebracht und/oder die zu überprüfenden Glasgefäße 1 werden nacheinander in eine geeignete Prüfposition relativ zu der Meßeinrichtung 33 gebracht.

Die Vorrichtung 40 umfaßt neben der Meßeinrichtung 33 eine über eine Anschlußleitung 34 mit der Meßeinrichtung 33 verbundenen Auswerteeinrichtung 35. Mit Hilfe dieser Auswerteeinrichtung 35 wird durch einen Vergleich des Meßergebnisses mit einem Referenzwert ermittelt, ob ein gewünschter, ordnungsgemäßer Energieeintrag erfolgt ist oder nicht. Fehlerhaft versiegelte Gefäße 1 können anschließend mit Hilfe einer geeigneten Sortiereinrichtung (nicht dargestellt) aussortiert werden.

Zum Öffnen des Glasgefäßes 1 wird zunächst der Schraubdeckel 8 entfernt. Anschließend wird mit Hilfe der Grifflasche 36 die Siegelfolie 6 von der Mündung 7 abgezogen.

In einer besonders bevorzugten Ausführungsform der Erfindung ist wenigstens eine der elektrisch leitfähigen Schichten 26, 27 oder ein Teil davon als Grifflasche 36 ausgebildet. Zu diesem Zweck ist ein Schichtverbund 37 bestehend aus der mündungsfernen elektrisch leitfähigen Schicht 26 und dem Dielektrikum 29 derart modifiziert, daß er sich von der mündungsnahen elektrisch leitfähigen Schicht 27 abheben und von dieser, als Grifflasche 36 dienend, weg verschwenken läßt.

Wie in Fig. 9 abgebildet, ist dabei nur ein Teil 37 der in Schichten aufgebauten Siegelfolie 6 als Grifflasche 36 aus dem Schichtaufbau herausschwenkbar, während ein anderer Teil des Schichtaufbaus, hier die mündungsnahe elektrisch leitfähige Schicht 27 mit der sich daran befindenden Kunststoffschicht 29, stets fest mit der Mündung 7 verbunden bleibt. Gleichzeitig ist, wie in Fig. 8 illustriert, die Grifflasche 36 mit ihrem Schichtverbund 37 lediglich in einem Folienteilbereich 38 vorgesehen, während in dem angrenzenden Folienteilbereich 39 die Schichten des Schichtaufbaus fest miteinander verbunden und daher nicht von anderen Schichten abhebbar und als Grifflasche von der Mündung weg verschwenkbar sind. In Fig. 9 ist sowohl die Richtung 42, in der die Grifflasche 36 von dem Schichtaufbau weggeschwenkt wird, als auch eine mögliche Zugrichtung 43 zum vollständigen Entfernen der Siegelfolie 6 von der Mündung 7 eingezeichnet.

Ist der Schraubdeckel 8 mit der mündungsfernen elektrisch leitfähigen Schicht 26 verbunden, beispielsweise über eine Klebeverbindung, entsteht beim Entfernen des Schraubdeckels 8 das typische "Knack"-Geräusch, das dem Kunden die Unversehrtheit des Verschlusses anzeigt. Vorteilhafterweise ist der Schraubdeckel 8 mit demjenigen Teil der mündungsfernen elektrisch leitfähigen Schicht 26 verbunden, der zugleich als Grifflasche 36 ausgebildet ist. Die Verbindung ist dabei vorzugsweise derart ausgeführt, daß beim Entfernen des Schraubdeckels 8 zugleich die Grifflasche 36 angehoben und aus der Siegelfolie 6 herausgeschwenkt wird, so daß die Grifflasche 36 bei entferntem Schraubdeckel 8 zumindest teilweise von der Siegelfolienoberseite absteht und somit einfacher gegriffen werden kann.

Zusammenfassend ist die Siegelfolie 6 zur Versiegelung der Mündung 7 von offenen Glasgefäßen 1 gekennzeichnet durch einen Schichtaufbau, welcher Schichtaufbau eine erste elektrisch leitfähige Schicht 26, eine zweite elektrisch leitfähige Schicht 27 und eine zwischen der ersten elektrisch leitfähigen Schicht 26 und der zweiten elektrisch leitfähigen Schicht 27 angeordnete elektrisch isolierende Schicht 28 umfaßt derart, daß der Schichtaufbau einen Kondensator 30 bildet.

Die Siegelfolie 6 ist vorzugsweise dadurch gekennzeichnet, daß die elektrisch isolierende Schicht 28 eine die Kapazität des Kondensators 30 beeinflussende Eigenschaft aufweist, welche Eigenschaft durch einen Energieeintrag in die Siegelfolie 6 veränderbar ist.

Die Siegelfolie 6 ist vorzugsweise dadurch gekennzeichnet, daß es sich bei der durch Energieeintrag in die Siegelfolie 6 veränderbare Eigenschaft der elektrisch isolierenden Schicht 28 um die Schichtdicke 31 der elektrisch isolierenden Schicht 28 handelt.

Die Siegelfolie 6 ist vorzugsweise dadurch gekennzeichnet, daß wenigstens ein Teil des Schichtaufbaus, insbesondere eine der elektrisch leitfähigen Schichten 26, 27 oder ein Teil davon, als Grifflasche 36 ausgebildet ist.

Die Vorrichtung 40 zur Überprüfung der Versiegelung der Mündung 7 von offenen Glasgefäßen 1 durch eine Siegelfolie 6 ist gekennzeichnet durch eine Meßeinrichtung 33 zum berührungslosen Messen der Kapazität eines durch einen Schichtaufbau gebildeten Kondensators 30, welcher Schichtaufbau eine erste elektrisch leitfähige Schicht 26 der Siegelfolie 6, eine zweite elektrisch leitfähige Schicht 27 der Siegelfolie 6 und eine zwischen der ersten elektrisch leitfähigen Schicht 26 und der zweiten elektrisch leitfähigen Schicht 27 angeordnete elektrisch isolierende Schicht 28 der Siegelfolie 6 umfaßt, und/oder zum Messen einer Eigenschaft eines von dem Kondensator 30 beeinflußten oder mit dem Kondensator 30 in Wechselwirkung stehenden Systems, insbesondere zum Messen der Stärke des Einflusses des Kondensators 30 auf ein Meßfeld, und ist weiter gekennzeichnet durch eine Auswerteeinrichtung 35, ausgebildet zum Auswerten des Meßergebnisses, insbesondere zum Vergleichen eines Meßwertes mit einem Referenzwert.

Das Verfahren zur Überprüfung der Versiegelung der Mündung 7 von offenen Glasgefäßen 1 durch eine Siegelfolie 6 ist gekennzeichnet durch ein berührungsloses Messen der Kapazität eines durch einen Schichtaufbau gebildeten Kondensators 30, welcher Schichtaufbau eine erste elektrisch leitfähige Schicht 26 der Siegelfolie 6, eine zweite elektrisch leitfähige Schicht 27 der Siegelfolie 6 und eine zwischen der ersten elektrisch leitfähigen Schicht 26 und der zweiten elektrisch leitfähigen Schicht 27 angeordnete elektrisch isolierende Schicht 28 der Siegelfolie 6 umfaßt, und/oder ein Messen einer Eigenschaft eines von dem Kondensator 30 beeinflußten oder mit dem Kondensator 30 in Wechselwirkung stehenden Systems, insbesondere ein Messen der Stärke des Einflusses des Kondensators 30 auf ein elektromagnetisches Meßfeld, und ist weiter gekennzeichnet durch ein Auswerten des Meßergebnisses, insbesondere ein Vergleichen eines Meßwertes mit einem Referenzwert.

Das Verfahren ist vorzugsweise dadurch gekennzeichnet, daß vor dem Messen ein Energieeintrag in die Siegelfolie 6 erfolgt.

Das Verfahren ist vorzugsweise dadurch gekennzeichnet, daß der Energieeintrag in die Siegelfolie 6 zur Veränderung einer die Kapazität des Kondensators 30 beeinflussenden Eigenschaft dient.

Das Verfahren ist vorzugsweise dadurch gekennzeichnet, daß der Energieeintrag in die Siegelfolie 6 zum Verbinden der Siegelfolie 6 mit der Mündung 7 dient.

Nachfolgend wird ein Ausführungsbeispiel der vorliegenden Erfindung beschrieben.

Die Oberfläche der Mündung 7 des Glasgefäßes 1 ist mit einer Mündungsbeschichtung 10 versehen. Das Beschichtungsmittel kann auf unterschiedliche Art und Weise auf die Mündung 7 aufgebracht werden, beispielsweise so, wie in den Patentanmeldungen EP 1340726 A1 oder EP 1452499 A1 beschrieben.

In einem bevorzugten Ausführungsbeispiel umfaßt das Beschichtungsmittel eine erste pulverförmige Substanz aus gemahlenem Zirkonsilikat, eine zweite pulverförmige Substanz aus gemahlenem Borosilikat. Beide Pulver enthalten nahezu keine alkalischen Bestandteile und eignen sich sehr gut zur Bildung einer Schutzschicht "Glasalterung", insbesondere gegen das Austreten von Salzen bei Klarglas bzw. das Austreten von Fluorbestandteilen bei Opalglas. Das Beschichtungsmittel umfaßt weiter ein öliges Medium, welches die beiden pulverförmigen Substanzen möglichst gleichmäßig in der Schwebe hält. Das ölige Medium umfaßt ein organisches Öl als Trägersubstanz, ein Harz, um die Haftung des Beschicht.ungsmittels auf der Mündungsoberfläche zu gewährleisten und ein Netzmittel, um die zwei pulverförmigen Substanzen vor dem Absetzen und Aushärten zu bewahren.

Dieses derart gebildete Beschichtungsmittelgrundmaterial wird erfindungsgemäß mit einer pulverförmigen dispersen Substanz ergänzt. Hierzu wird den beiden Glaspulvern ein Phthalocyanin beigemengt, welches dann ebenfalls von dem öligen Medium gleichmäßig in der Schwebe gehalten wird. Der Anteil des Phthalocyanins in dem Beschichtungsmittel beträgt dabei ca. 20 Gew.-%.

Das Beschichtungsmaterial weist eine geeignete Korngrößenverteilung auf, um die durch die rauhe Oberfläche gebildeten Kapillaren der Mündungsbeschichtung 10 nicht zu verschließen und eine kapillare Adhäsion zwischen Siegelfolie 6 und Mündung 7 sicherzustellen.

Der Wert des dispersen Anteils der Oberflächenenergie des Materials der Kunststoffschicht 29 beträgt beispielsweise ca. 30 mN/m. Das Beschichtungsmittelgrundmaterial weist nahezu keine dispersen Anteile auf. Mit anderen Worten wäre ohne den Zusatz der dispersen Substanz der Wert des dispersen Anteils der Oberflächenenergie des Beschichtungsmaterials nahezu null. Durch den Zusatz der dispersen Substanz wird der Wert des dispersen Anteils der Oberflächenenergie des Beschichtungsmaterials auf ca. 30 mN/m erhöht. Damit werden die bisher nicht genutzten, auf dem dispersen Anteil der Oberflächenenergie beruhenden Bindungsmöglichkeiten der Kunststoffschicht 29 optimal ausgeschöpft.

Die neuartige Mündungsbeschichtung 10 kann mit verschiedenen Arten von Siegelfolien 6 und/oder verschiedenen Arten von Behälterverschlüssen und/oder verschiedenen Versiegelungsverfahren verwendet werden. Als besonders vorteilhaft hat sich jedoch die Verwendung der neuen Mündungsbeschichtung 10 bei dem oben beschriebenen berührungslosen induktiven Versiegelungsverfahren erwiesen, bei dem die Druckkraft auf die Siegelfolie 6 ausschließlich über einen Schraubdeckel 8 aufgebracht wird. Anstelle eines Schraubdeckels 8 kann dabei jedoch auch ein Verschluß verwendet werde, der auf die Siegelfolie drückt und mit dem Behälter eine Rast-, Schnapp-, Steck- oder Klemmverbindung ausbildet.

Alle in der Beschreibung, den nachfolgenden Ansprüchen und der Zeichnung dargestellten Merkmale können sowohl einzeln. als auch in beliebiger Kombination miteinander erfindungswesentlich sein.

### Bezugszeichenliste

- 1: Glasgefäß
- 2: Induktionstunnel
- 3: Förderband
- 4: Induktor (alt)
- 5: Vorrichtung zum Energieeintrag
- 6: Siegelfolie
- 7: Mündung
- 8: Schraubdeckel
- 9: Induktor (neu)
- 10: Mündungsbeschichtung
- 11: Positioniereinheit
- 12: Induktorgehäuse
- 13: Leiter
- 14: Steuereinheit
- 15: Mündungsachse
- 16: erste Anschlußleitung
- 17: zweite Anschlußleitung
- 18: Horizontalbewegung der Glasgefäße
- 19: Bewegung der Induktoren
- 20: Spuleninnere
- 21: Spulenachse
- 22: Siegelfolie (alt)
- 23: Oberschicht
- 24: Unterschicht
- 25: Zwischenschicht
- 26: mündungsferne leitfähige Schicht
- 27: mündungsnahe leitfähige Schicht
- 28: isolierende Schicht, Dielektrikum
- 29: Verbindungsschicht, Kunststoffschicht
- 30: Kondensator
- 31: Schichtdicke
- 32: (frei)
- 33: Meßeinrichtung
- 34: Anschlußleitung
- 35: Auswerteeinrichtung
- 36: Grifflasche
- 37: Schichtverbund
- 38: erster Folienteilbereich
- 39: zweiter Folienteilbereich
- 40: Vorrichtung zur Überprüfung der Versiegelung
- 41: (frei)
- 42: Schwenkrichtung
- 43: Zugrichtung

## Patentansprüche

1. Versiegelungssystem, umfassend
- eine an einer Oberfläche einer Mündung (7) eines offenen Glasgefäßes (1), insbesondere eines Opalglasgefäßes, angebrachte Mündungsbeschichtung (10) zur Bildung einer Haftunterlage für eine Siegelfolie (6) und
- eine mehrlagige Siegelfolie (6) mit einer unteren, im versiegelten Zustand in unmittelbarem Kontakt zu der Mündungsbeschichtung (10) stehenden Schicht (29),
**dadurch gekennzeichnet,**
**daß** die untere Schicht (29) aus einem Kunststoffmaterial besteht,
**daß** das Beschichtungsmittel wenigstens eine disperse Substanz enthält derart, daß der disperse Anteil der Oberflächenenergie des Beschichtungsmittels im wesentlichen dem dispersen Anteil der Oberflächenenergie der unteren Schicht (29) der Siegelfolie (6) entspricht,
und **daß** es sich bei der wenigstens einen dispersen Substanz um eine makrocyclische Verbindung mit einer alternierenden Stickstoff-Kohlenstoff-Ringstruktur handelt.

2. Versiegelungssystem nach Anspruch 1, **dadurch gekennzeichnet, daß** die wenigstens eine disperse Substanz ein Phthalocyanin oder ein Phthalocyanin-Derivat enthält.

3. Versiegelungssystem nach Anspruch 1 oder 2, **dadurch gekennzeichnet, daß** der Anteil der wenigstens einen dispersen Substanz in dem Beschichtungsmittel ca. 10-30 Gew.-%, bevorzugt ca. 15-25 Gew.-%, beträgt.

4. Versiegelungssystem nach einem der Ansprüche 1 bis 3, **dadurch gekennzeichnet, daß** die wenigstens eine disperse Substanz pulverförmig ist.

5. Versiegelungssystem nach Anspruch 4, **dadurch gekennzeichnet, daß** das Beschichtungsmittel zusätzlich zu der wenigstens einen dispersen Substanz aufweist:
- eine oder mehrere pulverförmige Substanzen aus gemahlenem Glas,
- ein organisches Öl als Trägersubstanz,
- ein Harz, um die Haftung des Beschichtungsmittels auf der Mündungsoberfläche zu gewährleisten,
- ein Netzmittel, um die pulverförmigen Substanzen aus Glas oder Keramik und/oder die wenigstens eine disperse Substanz vor dem Absetzen und Aushärten zu bewahren.

## Claims

1. Sealing system, comprising
- a mouth coating (10) attached to a surface of a mouth (7) of an open glass vessel (1), in particular an opal glass vessel, for forming an adhesion substrate for a sealing film (6) and
- a multilayered sealing film (6) having a lower layer (29) which in the sealed state is in direct contact with the mouth coating (10),
**characterized in that**
the lower layer (29) is made of a plastics material,
**in that** the coating agent comprises at least one disperse substance in such a way that the disperse fraction of the surface energy of the coating agent is substantially equal to the disperse fraction of the surface energy of the lower layer (29) of the sealing layer (6)
and **in that** the at least one disperse substance is a macrocyclic compound having an alternating nitrogencarbon ring structure.

2. Sealing system according to Claim 1, **characterized in that** the at least one disperse substance comprises a phthalocyanine or a phthalocyanine derivative.

3. Sealing system according to Claim 1 or 2, **characterized in that** the proportion of the at least one disperse substance in the coating agent is about 10-30 wt%, preferably about 15-25 wt%.

4. Sealing system according to any of Claims 1 to 3, **characterized in that** the at least one disperse substance is pulverulent.

5. Sealing system according to Claim 4, **characterized in that** the coating agent comprises in addition to the at least one disperse substance:
- one or more pulverulent substances made of ground glass,
- an organic oil as a carrier substance,
- a resin in order to ensure adhesion of the coating agent on the mouth surface,
- a wetting agent to protect the pulverulent substances made of glass or ceramic and/or the at least one disperse substance from sedimentation and hardening.

## Revendications

1. Système de scellement, comprenant :
- un revêtement d'embouchure (10) appliqué sur une surface d'une embouchure (7) d'un contenant en verre ouvert (1), notamment d'un contenant en verre opale, pour la formation d'une sous-couche adhésive pour un film de scellement (6), et
- un film de scellement multicouche (6) comprenant une couche inférieure (29) en contact direct avec le revêtement d'embouchure (10) à l'état scellé,
**caractérisé en ce que**
la couche inférieure (29) est constituée d'un matériau en plastique,
l'agent de revêtement contient au moins une substance dispersée telle que la proportion dispersée de l'énergie de surface de l'agent de revêtement corresponde essentiellement à la proportion dispersée de l'énergie de surface de la couche inférieure (29) du film de scellement (6),
et ladite au moins une substance dispersée est un composé macrocyclique présentant une structure cyclique azote-carbone alternée.

2. Système de scellement selon la revendication 1, **caractérisé en ce que** ladite au moins une substance dispersée contient une phtalocyanine ou un dérivé de phtalocyanine.

3. Système de scellement selon la revendication 1 ou 2, **caractérisé en ce que** la proportion de ladite au moins une substance dispersée dans l'agent de revêtement est d'environ 10 à 30 % en poids, de préférence d'environ 15 à 25 % en poids.

4. Système de scellement selon l'une quelconque des revendications 1 à 3, **caractérisé en ce que** ladite au moins une substance dispersée est en poudre.

5. Système de scellement selon la revendication 4, **caractérisé en ce que** l'agent de revêtement comprend en plus de ladite au moins une substance dispersée :
- une ou plusieurs substances en poudre à base de verre broyé,
- une huile organique en tant que substance vecteur,
- une résine pour assurer l'adhésion de l'agent de revêtement sur la surface d'embouchure,
- un agent mouillant pour préserver les substances en poudre à base de verre ou de céramique et/ou ladite au moins une substance dispersé d'un dépôt et durcissement.
